# EUROPÄISCHE PATENTANMELDUNG

(11) **EP 4 606 220 A1**
(43) Veröffentlichungstag der Anmeldung: **27.08.2025**
(21) Anmeldenummer: 24159365.6
(22) Anmeldetag: 23.02.2024
(51) Int. Cl.: A23C 20/02, A23D 7/005, A23D 7/04, A23L 29/212, A23L 29/256

(54) **LEBENSMITTEL ENTHALTEND EIN OLEOGEL**

(71) Anmelder: DMK Deutsches Milchkontor GmbH, 27404 Zeven (DE)
(72) Erfinder: DÖRING, Sven-Rainer, 27404 Zeven (DE); Steffens, Marco, 27404 Elsdorf (DE)
(74) Vertreter: Soilan Rodriguez, Jose David

(57) **Zusammenfassung**

Vorgeschlagen wird ein Lebensmittelprodukt enthaltend ein Oleogel, wobei die kontinuierliche Phase des Oleogels ein Pflanzenöl ist.

## Beschreibung

### GEBIET DER ERFINDUNG

Die Erfindung befindet sich auf dem Gebiet der Lebensmitteltechnologie und betrifft ein Lebensmittelprodukt - insbesondere eine vegane Käsealternative - enthaltend ein Oleogel, sowie deren Herstellungsverfahren.

### TECHNOLOGISCHER HINTERGRUND

Das Bewusstsein für eine gesunde Ernährungsweise ist in den letzten Jahren unter Verbrauchern kontinuierlich gestiegen. So beinhaltet eine gesunde Ernährungsweise das Bereitstellen aller wichtigen Nährstoffe für den Körper ohne übermäßigen Konsum von Fetten, Salz und Zucker. Neben einer gesunden und ausgewogenen Ernährung rückt auch immer mehr das Thema der überwiegenden pflanzlichen Ernährung in den gesellschaftlichen Fokus. Ein Umschwung auf eine vegetarische Lebensweise besitzt demnach einen positiven Einfluss auf das Klima. Bei Vermeidung von Fleisch als Teil der Ernährung kann vermieden werden, dass eine große Menge CO₂ freigesetzt wird.

Die Nachfrage nach veganen Lebensmitteln stellt somit einen sehr attraktiven und wachstumsstarken Markt für die Lebensmittelhersteller dar. Hinzu kommt, dass gerade die sich vegan ernährenden Konsumenten sehr viel Wert auf eine natürliche Erzeugung der Lebensmittel legen und daher bevorzugt auf BIO-Lebensmittel zurückgreifen. Im Bereich der veganen Käse-Alternativen ist das Angebot insgesamt jedoch überschaubar und teilweise nicht überzeugend im Hinblick auf Sensorik, Deklaration, Nährwert, BIO-Qualität und Funktionalität.

Allgemein werden von Konsumenten bei den derzeitig auf dem Markt vorhandenen Produkten unter anderem die Konsistenz und das Mundgefühl als wenig überzeugend genannt. Die Konsistenz der veganen Käse-Alternativen ist im Vergleich zum Naturkäse weniger elastisch und eher spröde. Das Mundgefühl bewerten die meisten Konsumenten als nicht saftig und nicht cremig genug. Es ist daher davon auszugehen, dass eine Verbesserung der sensorischen Eigenschaften zu einer höheren Konsumentenakzeptanz führen würde.

Weiterhin basieren viele der veganen Käse-Alternativen auf Lebensmittelstärken, Pflanzenfett und Bindemittel. Proteinreiche Lebensmittel werden gar nicht oder nur in kleinen Mengen eingesetzt, sodass der Proteingehalt der veganen Käse-Alternativen sehr gering ist. Ein höherer Proteingehalt ist jedoch insofern wünschenswert, als dadurch eine ausgewogenere und gesündere Ernährung erzielt werden könnte.

Um die veganen Käse-Alternativen ernährungsphysiologisch aufzuwerten und sensorisch zu verbessern, wurden in den letzten Jahren insbesondere Produkte mit einem geringen Pflanzenproteingehalt meist unter 2 % auf den Markt gebracht. Höhere Proteinkonzentrationen sind insbesondere mit Pflanzenproteinen in Kombination mit Stärke nach jetzigem Erkenntnisstand schwer zu erreichen, da dadurch keine käseähnliche Konsistenz aufgebaut werden kann. Ferner waren die Produkte nicht schnittfähig, erzeugten ein raues Mundgefühl und hatten ein mattes käseuntypisches Aussehen.

Leider haben die meisten Inhaltsstoffe in veganem Käse-Ersatz keinen hohen gesundheitlichen Wert. Zwar ist die Hauptzutat glücklicherweise eine gesunde, nämlich Wasser. Veganer Hartkäse hat zumeist einen Wassergehalt von etwa 58 Gew.-%. Allerdings hört es danach auch mit den gesunden Inhaltsstoffen auf. Nämlich bestehen die Käse-Alternativen zu 20-35 Gew.-% aus Kokosöl, oder Kokosfett, oder Sheabutter, oder Palmfett, oder Palmöl oder Mischungen daraus, welche leider viele gesättigte Fettsäuren enthält, die nur maßvoll konsumiert werden sollten. Auch modifizierte Stärke kommt in veganem Käse als Bindemittel vor, was sich in einem Kohlenhydratanteil von ca. 20 Gew.-% niederschlägt.

### AUFGABE DER ERFINDUNG

Die Aufgabe der vorliegenden Erfindung hat daher darin bestanden, ein Lebensmittelprodukt bereitzustellen, welches einen reduzierten Gehalt an gesättigten Fettsäuren aufweist. Darüber hinaus sollte ein solches Lebensmittelprodukt einen hohen Proteingehalt aufweisen.

Eine weitere Aufgabe der vorliegenden Erfindung hat daher darin bestanden eine vegane Käsealternative bereitzustellen, welche in seiner Textur, seinen organoleptischen Eigenschaften und in seinem ernährungsphysiologischen Profil einem klassischen aus Milch hergestellten Käse ähnelt, jedoch einen reduzierten Gehalt an gesättigte Fettsäuren im Vergleich mit den bekannten veganen Käsealternative aufweist. Darüber hinaus sollte eine solche vegane Käsealternative einen hohen Proteingehalt aufweisen.

### BESCHREIBUNG DER ERFINDUNG

Ein erster Gegenstand der Erfindung betrifft eine Lebensmittelprodukt enthaltend ein Oleogel, wobei die kontinuierliche Phase, das heißt, die Ölkomponente, des Oleogels ein Pflanzenöl darstellt.

In einer bevorzugten Ausführungsform handelt sich beim erfindungsgemäßen Lebensmittelprodukt um ein veganes Produkt, vorzugsweise eine vegane Käsealternative oder eine vegane Margarine.

In Sinne der vorliegenden Erfindung vegan sind Lebensmittel, die keine Erzeugnisse tierischen Ursprungs sind und bei denen auf allen Produktions- und Verarbeitungsstufen keine
- Zutaten (einschließlich Zusatzstoffe, Trägerstoffe, Aromen und Enzyme) oder
- Verarbeitungshilfsstoffe oder
- Nicht-Lebensmittelzusatzstoffe, die auf dieselbe Weise und zu demselben Zweck wie Verarbeitungshilfsstoffe verwendet werden,
die tierischen Ursprungs sind, in verarbeiteter oder unverarbeiteter Form zugesetzt oder verwendet worden sind.

Überraschenderweise wurde gefunden, dass das erfindungsgemäße Lebensmittelprodukt die eingangs geschilderte umfangreiche Aufgabe vollständig erfüllt. Der Austausch von mindestens 50 Gew.-% der Fettkomponente, die aus Kokosöl, oder Kokosfett, oder Sheabutter, oder Palmfett, oder Palmöl oder Mischungen daraus oder Mischungen daraus besteht, in einer vegane Käsealternative durch ein rapsölbasiertes Oleogel, der nicht nur den Gehalt an gesättigte Fettsäuren im Endprodukt erheblich reduziert, sondern auch die organoleptischen Eigenschaften des Endproduktes verbessert.

Oleogele sind Systeme, bei denen flüssiges Öl in das dreidimensionale Netzwerk eines Strukturanten eingebunden wird. Während bei herkömmlichen festen Fetten durch die Kristallisation der höherschmelzenden Triglyceride ein dreidimensionales Netzwerk entsteht, in das niedrigerschmelzende Komponenten eingelagert sind, bilden bei Oleogelen Strukturanten wie Sonnenblumenwachs, Ethylcellulose oder Monoglyceride das dreidimensionale Netzwerk aus und binden ein flüssiges Öl in dies Netzstruktur ein. Dadurch erhält das flüssige Öl eine feste Struktur, die mit der von herkömmlichen festen Fetten vergleichbar ist.

### Kontinuierliche Phase

In Sinne der der vorliegenden Erfindung kommen als kontinuierliche Phase des Oleogels pflanzliche Öle in Frage. Typische Beispiele sind Sonnenblumenöl, Olivenöl und insbesondere Rapsöl, vorzugsweise raffiniertes Rapsöl. Ernährungswissenschaftler bezeichnen es aufgrund seines niedrigen Gehalts an gesättigten Fettsäuren, seines hohen Anteils an einfach ungesättigten Ölsäure und seines günstigen Verhältnisses von Linol- zu Linolsäure von 2:1 als fast ideales Speiseöl. Daher ist das Oleogel des erfindungsgemäßen Lebensmittelprodukts, vorzugsweise der erfindungsgemäßen veganen Käsealternative ein rapsölbasiertes Oleogel.

In einer weiteren Ausführungsform liegt der Rapsöl-Gehalt des rapsölbasierten Oleogels im Bereich von etwa 70 bis etwa 99 Gew.-%, vorzugsweise im Bereich von etwa 85 bis etwa 95 Gew.-%.

In einer weiteren Ausführungsform liegt der Rapsöl-Gehalt des erfindungsgemäßen Lebensmittelprodukts im Bereich von etwa 5 bis etwa 40 Gew.-%, vorzugsweise im Bereich von etwa 15 bis etwa 35 Gew.-%

### Strukturbildende Komponenten

In einer bevorzugten Ausführungsform ist die strukturbildende Komponente des Oleogels ausgewählt aus der Gruppe bestehend aus Polysacchariden, Monoglyceride und hydrophoben Proteinen. Als Polysaccharide kommen beispielsweise Xanthan-Gum, Guar-Guar, Agar-Agar, Alginate und Tylosen, Carboxymethylcellulose und Hydroxyethyl- und Hydroxypropylcellulose in Betracht. In einer weiteren bevorzugten Ausführungsform ist die strukturbildende Komponente Ethylcellulose.

In einer weiteren bevorzugten Ausführungsform ist die strukturbildende Komponente hydrophoben Proteinen. Es konnte festgestellt werden, dass mittels hydrophober Proteine als strukturbildende Komponente einen größeren Ähnlichkeitsgrad zum klassischen aus Milch hergestellten Käse erreicht wird. Prolamine sind hier ein Beispiel für hydrophobe Proteine. Diese kommen in vielen Pflanzen vor. Ansonsten ist es möglich auch andere Proteine aus komplexen Lebensmitteln in der Fettphase in Lösung zu bringen
Der Strukturbildner ist üblicherweise in Konzentrationen bis maximal 15 Gew.-% enthalten. Dann sind zum Beispiel Oleogele auf Basis Ethylcellulose schon so fest, dass sie brüchig werden. Für Proteine ist dies aber denkbar.

### Emulgatoren

In Hinblick auf die Textur und Stabilität des Endproduckst hat es sich als vorteilhaft erwiesen, dass das Oleogel ferner mindestens einen Emulgator umfasst. In einer bevorzugten Ausführungsform, ist der Emulgator ausgewählt aus der Gruppe bestehend aus Polyoxyethylensorbitanmonooleat (Tween 80), Polyoxyethylensorbitanmonostearat (Tween 60), Sorbitanmonooleat (SMO oder Span 80), Sorbitanmonostearat (SMS oder Span 60), Glycerinmonooleat (GMO), Glycerinmonostearat (GMS), Glycerinmonopalmitat (GMP), Polyglycerylester von Laurinsäure - Polyglycerylpolylaurat (PGPL), Polyglycerylester von Stearinsäure - Polyglyerylpolystearat (PGPS), Polyglycerylester von Ölsäure (PGPO) - Polyglycerylpolyoleat (PGPO) und Polyglycerylester von Ricinolsäure (PGPR), vorzugsweise ausgewählt aus der Gruppe bestehend aus SMS, GMS, SMO, GMO und PGPL, insbesondere aus der Gruppe bestehend aus SMO oder GMO.

In Hinblick auf die Textur und Stabilität des Endproduckst hat sich als vorteilhaft erwiesen, dass die strukturbildende Komponente des Oleogels und den Emulgator im Gewichtsverhältnis 10:1 bis 1:1 vorliegen, vorzugsweise im Gewichtsverhältnis 4:1 bis 2:1.

### Antioxidantien

Darüber hinaus kann die kontinuierliche Phase des Oleogels mit wertvollen Substanzen eingereicht werden, insbesondere mit Antioxidantien soweit diese für den Verzehr zugelassen sind. Vorzugsweise kommen lipophile Antioxidantien in Frage, wie beispielsweise Tocopherole, Rosmarinextrakt, Ascorbylpalmitat, Carotinoide, Butylhydroxyanisol (BHA), Butylhydroxytoluol (BHT) und deren Mischungen.

### Lebensmittelprodukte

In einer bevorzugten Ausführungsform enthält oder besteht das erfindungsgemäße Lebensmittelprodukt aus:
(a) etwa 0 bis etwa 20 Gew.-% einer pflanzlich-basierten Fettkomponente;
(b) etwa 5 bis etwa 60 Gew.-% des pflanzenölbasierten Oleogels,
(c) etwa 15 bis etwa 35 Gew.-% native Stärke oder modifizierte Stärke;
(d) etwa 0,5 bis etwa 3 Gew.-% (Koch-)Salz;
(e) etwa 0,1 bis etwa 2 Gew.-% Gelierungsmittel;
(f) etwa 0,1 bis etwa 2 Gew.-% Kohlenhydrate;
(g) etwa 0,1 bis etwa 6 Gew.-% pflanzliche Proteine;
(h) etwa 0,1 bis etwa 1,5 Gew.-% Aromen, Gewürze und/oder Farbstoffe;
(j) 0 bis etwa 5 Gew.-% weitere Nahrungsmittelbestandteile,
mit der Maßgabe, dass sich alle Mengenangaben mit Wasser zu 100 Gew.-% ergänzen.

In einer weiteren einer bevorzugten Ausführungsform enthält oder besteht das erfindungsgemäße Lebensmittelprodukt aus:
(a) etwa 0 bis etwa 10 Gew.-% einer Pflanzen-abstammenden Fettkomponente;
(b) etwa 10 bis etwa 45 Gew.-% des pflanzenölbasierten Oleogels,
(c) etwa 20 bis etwa 25 Gew.-% native Stärke oder modifizierte Stärke;
(d) etwa 1 bis etwa 1,7 Gew.-% (Koch-)Salz;
(e) etwa 0,2 bis etwa 0,6 Gew.-% Gelierungsmittel;
(f) etwa 0,3 bis etwa 0,6 Gew.-% Kohlenhydrate;
(g) etwa 2 bis etwa 4 Gew.-% pflanzliche Proteine;
(h) etwa 0,1 bis etwa 1,5 Gew.-% Aromen, Gewürze und/oder Farbstoffe;
(j) 0 bis etwa 5 Gew.-% weitere Nahrungsmittelbestandteile,
mit der Maßgabe, dass sich alle Mengenangaben mit Wasser zu 100 Gew.-% ergänzen.

Das erfindungsgemäße Lebensmittelprodukt lässt sich zudem durch die optionale Zugabe weiterer Nahrungsmittelbestandteile (Komponente j) beliebig ergänzen bzw. geschmacklich abändern und ist technisch einfach herzustellen.

Wenn das erfindungsgemäße Lebensmittelprodukt eine vegane Käsealternative ist, sind alle Bestandteile des erfindungsgemäßen Lebensmittelprodukts, einschließlich aller optionalen Bestandteile, für Veganer akzeptabel. Weiter bevorzugt sind alle Bestandteile des Käses, einschließlich aller fakultativen Bestandteile, "Clean-Label"-Bestandteile. Insbesondere für gesundheitsbewusste Verbraucher, wie z. B. Veganer, bieten solche "Clean-Label"-Erzeugnisse Vorteile gegenüber Erzeugnissen, die Zutaten enthalten, die "*chemisch*", "*künstlich*" oder "*verarbeitet*" erscheinen. Daher ist das erfindungsgemäße Lebensmittelprodukt vorzugsweise ein "*Clean-Label*"*-*Produkt*.*

Wie oben ausgeführt, kann das erfindungsgemäße Lebensmittelprodukt eine Pflanzen-abstammenden Fettkomponente enthalten. In Sinne der vorliegenden Erfindung handelt es sich bei der Fettkomponente um jede Art von Fett oder Öl pflanzlichen Ursprungs, die für den menschlichen Verzehr geeignet ist. In Sinne der vorliegenden Erfindung ist Fett oder Öl eine Zusammensetzung, die mindestens 95 Gew.-%, vorzugsweise mindestens 98 Gew.-%, Di- und Triglyceride enthält, und ist vorzugsweise eine Zusammensetzung, die im Wesentlichen nur Triglyceride enthält, wobei die Menge an Diglyceriden weniger als 2 Gew.-%, vorzugsweise weniger als 1 Gew.-%, beträgt. Der Unterschied zwischen einem Fett und einem Öl besteht darin, dass ein Fett bei 20 °C fest ist, während ein Öl bei dieser Temperatur flüssig ist. Flüssig bedeutet in diesem Zusammenhang, dass die Viskosität so beschaffen ist, dass das Öl fließen kann, auch wenn es sich um eine viskose Flüssigkeit handeln kann.

### Pflanzenbasierte Fettkomponenten

In einer bevorzugten Ausführungsform ist die pflanzenbasierte Fettkomponente, die im Sinne der vorliegenden Erfindung als Komponente (a) in Frage kommen, ausgewählt aus der Gruppe bestehend aus Kakaobutter, Kokosöl, Palmöl, Palmfett, Palmkernöl, Kokosfett, Nussöl, Sheabutter, Aprikosenöl, Sojalecithin, Sonnenblumenöl, Sojaöl, Rapsöl oder Mischungen daraus. In Sinne der vorliegenden Erfindung fallen unter den Begriff "Nussöl" alle möglichen Pflanzen-abstammende Fettkomponente, die für den Fachmann als "Nussöle" zu verstehen sind, beispielweise Walnussöl, Haselnussöl, Mandelöl, Pistazienöl, Cashewöl, Pinienkernöl, Erdnussöl oder Macadamianussöl. In einer weiteren bevorzugten Ausführungsform ist die pflanzenbasierte Fettkomponente ausgewählt aus der Gruppe bestehend aus Kokosöl, Palmöl, Palmkernöl, Kokosfett, Sheabutter, Sonnenblumenöl, Sojaöl, Rapsöl oder Mischungen daraus.

In einer weiteren bevorzugten Ausführungsform umfasst oder besteht die pflanzenbasierte Fettkomponente aus einer Mischung aus Kokosfett und Sheabutter.

In einer besonders bevorzugten Ausführungsform, umfasst oder besteht die pflanzenbasierte Fettkomponente aus einer Mischung aus Kokosfett und Sheabutter, wobei das Gewichtsverhältnis Kokosfett: Sheabutter etwa 90:10 beträgt, vorzugsweise etwa 80:20, und insbesondere etwa 70:30.

Wie bereits ausgeführt, enthält das erfindungsgemäße Lebensmittelprodukt native Stärke oder modifizierte Stärke. In Sinne der vorliegenden Erfindung bedeutet native Stärke eine native, körnige Stärke, wie sie aus der Wurzel oder Knolle gewonnen wird. Der Vorteil der Verwendung einer nicht modifizierten oder nativen Stärke besteht darin, dass solche Stärken kennzeichnungsfrei in Lebensmitteln verwendet werden können, was für ein veganes Lebensmittelprodukt, insbesondere eine vegane Käsealternative, der auf gesundheitsbewusste Verbraucher abzielt, ein Vorteil ist. In einer besonders bevorzugten Ausführungsform sind die nativen Stärken, die im Sinne der vorliegenden Erfindung als Komponente (c) in Frage kommen, ausgewählt aus der Gruppe bestehend aus Kartoffel-, Mais-, Reis-, Weizen- und Tapiokastärke oder Mischungen daraus.

In Sinne der vorliegenden Erfindung bedeutet "*modifizierten Stärken*" Stärken, welche aus nativen Stärken durch physikalische, enzymatische oder chemische Verfahren gewonnen worden sind.

In einer weiteren bevorzugten Ausführungsform sind die modifizieren Stärken, die im Sinne der vorliegenden Erfindung als Komponente (c) in Frage kommen, ausgewählt aus der Gruppe bestehend aus modifizierten Kartoffel-, Mais-, Reis-, Weizen- und Tapiokastärke oder Mischungen daraus.

### Gelierungsmittel

Wie bereits ausgeführt, enthält das erfindungsgemäße Lebensmittelprodukt ein Gelierungsmittel. In einer bevorzugten Ausführungsform ist das Gelierungsmittel, welches im Sinne der vorliegenden Erfindung als Komponente (v) in Frage kommt, ausgewählt aus der Gruppe bestehend aus Agar-Agar (E 406), Carrageen (E 407), Gellan (E 418), Cellulose (E 460), Methylcellulose (E 461), Natriumalginat (E 401) oder Mischungen daraus, vorzugsweise aus der Gruppe bestehend aus Carrageen (E 407), Gellan (E 418) und Natriumalginat (E 401) oder Mischungen daraus. Es konnte festgestellt werden, dass Carrageen in Hinblick auf die Konsistenz und Stretch besonders vorteilhaft ist. Demzufolge ist - in einer weiteren besonderen bevorzugten Ausführungsform- das Gelierungsmittel Carrageen.

### Kohlenhydrate

Wie bereits ausgeführt, enthält das erfindungsgemäße Lebensmittelprodukt Kohlenhydrate. In einer bevorzugten Ausführungsform sind die Kohlenhydrate, die im Sinne der vorliegenden Erfindung als Komponente (vi) in Frage kommen, ausgewählt aus der Gruppe bestehend aus Allulose, Tagatose, Cellobiose, Xylose, Xylulose, Ribose, Ribulose, Sorbose, Allose, Altrose, Arabinose, Mannose, Gulose, Idose, Galactose, Talose, Nigerose, Kojibiose, Fructose, lactose, Dextrose, Saccharose, Maltodextrin und deren Gemischen, vorzugsweise aus der Gruppe bestehend aus Allulose, Xylulose, Ribose, Arabinose, Mannose, Galactose, Fructose, Lactose, Dextrose, Saccharose, Maltodextrin und deren Gemischen.

Es konnte festgestellt werden, dass Dextrose oder Maltodextrin in Hinblick auf den Geschmack und Bräunung besonders vorteilhaft ist, da die Bildung von Abbauprodukten mittels beispielweise Karamellisierungsprozesse oder Maillard-Reaktionen bei der Anwendung des Endprodukts bspw. beim Schmelzen minimiert werden. Demzufolge sind - in einer weiteren besonderen bevorzugten Ausführungsform- die Kohlenhydrate ausgewählt aus der Gruppe bestehend aus Dextrose und Maltodextrin und deren Gemischen.

### Pflanzliche Proteine

Wie bereits ausgeführt, enthält das erfindungsgemäße Lebensmittelprodukt pflanzliche Proteine. In einer bevorzugten Ausführungsform sind die pflanzliche Proteine, die im Sinne der vorliegenden Erfindung als Komponente (g) in Frage kommen, ausgewählt aus der Gruppe bestehend aus Sojaprotein, Lupinenprotein, Rapsprotein, Erbsenprotein, Reisprotein, Mandelprotein, oder einer Mischung davon, die einen hohen Proteingehalt in der Trockenmasse aufweisen und gleichzeitig einen geringen Balllaststoffgehalt haben, besonders geeignet sind, wie z. B. Soja-, Lupinen-, Raps-, Erbsen- und Reisprotein mit einem Proteingehalt größer 80 % oder Mandelprotein mit einem Proteingehalt von ca. 50 %. Dabei kann es sich um fermentierte oder nicht fermentierte Proteine handeln.

Wie bereits ausgeführt, enthält das erfindungsgemäße Lebensmittelprodukt Aromen, Gewürze und/oder Farbstoffe (Komponente (h). Die Natur dieser Zusatzstoffe ist im Sinne der Erfindung wenig kritisch und wird im Wesentlichen durch die geschmacklichen Vorgaben bestimmt. Wenn das erfindungsgemäße Lebensmittelprodukt eine vegane Käsealternative ist, müssen diese Zusatzstoffe nur die Voraussetzung erfüllen, dass sie kompatibel in einem veganen Lebensmittelprodukt, insbesondere in einer veganen Käsealternative sind. Diese Zusatzstoffe sind für den Fachmann bestens bekannt, und müssen daher nicht weiter spezifiziert werden.

Die Auswahl der weiteren Nahrungsmittelbestandteile, die als fakultative Komponente (ix) vorhanden sein können, ist unkritisch und wird nur durch Einsatzzweck, Geschmack oder Optik bestimmt. Diese Zusatzstoffe sind für den Fachmann bestens bekannt, und müssen daher nicht weiter spezifiziert werden.

Ein weiterer Bestandteil des erfindungsgemäßen Lebensmittelprodukts ist Wasser. Das Wasser ist vorzugsweise Leitungswasser, das für die Verwendung in Lebensmitteln geeignet ist. Das heißt, das Wasser muss ausreichend sauber sein, und sollte keine überschüssigen Salze, Mikroorganismen oder toxischen Bestandteile enthalten. In einer bevorzugten Ausführungsform ist das Wasser mikrofiltriertes Wasser. Wasser wird in einer solchen Menge verwendet, dass sich alle Bestandteile des Lebensmittelprodukts zu 100 Gew.-% addieren.

### Herstellverfahren

Ein weiterer Gegenstand der vorliegenden Erfindung betrifft ein Verfahren zur Herstellung des Lebensmittelprodukts nach einem der vorhergehenden Ansprüche umfassend oder bestehend aus den folgenden Schritten:
(A) Bereitstellen eines pflanzenölbasierten Oleogels;
(B) Bereitstellen von erwärmtem Wasser, wobei das Wasser eine Temperatur ≥30 °C und < 60 °C aufweist;
(C) Zugabe von Salz zum Wasser aus Schritt (B) unter Rühren, wobei die Temperatur während und am Ende der Zugabe in dem in Schritt (B) definierten Bereich liegt;
(D) Zugabe eines Gelierungsmittels zum Zwischenprodukt des Schrittes (C) unter Rühren, wobei die Temperatur während und am Ende der Zugabe in dem Schritt (b) definierten Bereich liegt;
(E) Erhitzen des Zwischenprodukts des Schritts (D) unter Rühren auf eine Temperatur ≥ 60 °C b ≤ 90 °C;
(F) Zugabe des Oleogels des Schritts (A) und optional einer pflanzlich-basierten Fettkomponente zum Zwischenprodukt des Schrittes (E) unter Rühren, wobei die Temperatur während und am Ende der Zugabe in dem in Schritt (E) definierten Bereich liegt;
(G) Erhitzen des Zwischenprodukts des Schritts (F) auf eine Temperatur ≥ 60 °C und ≤ 90 °C unter Rühren, mit der Maßgabe, dass die Temperatur höher als die Temperatur in den Schritten (E) bis (F) ist;
(H) Zugabe von:
   - mindestens einer nativen Stärke oder mindestens einer modifizierten Stärke,
   - Kohlenhydrate, die verschieden von Stärke sind, und
   - pflanzlichen Proteinen;
   zum Zwischenprodukt des Schrittes (F) unter Rühren, wobei die Temperatur während und am Ende der Zugabe in dem in Schritt (F) definierten Bereich liegt;
(J) Erhitzen des Zwischenprodukts des Schritts (H) auf eine Temperatur ≥ 60 °C und ≤ 100 °C unter Rühren, mit der Maßgabe, dass die Temperatur höher als die Temperatur der Schritte (E) bis (H) liegt;
(K) Zugabe von Aromen, Gewürze und/oder Farbstoffe und optional von weiteren Nahrungsmittelbestandteilen zum Zwischenprodukt des Schrittes (J) unter Rühren, wobei die Temperatur während und am Ende der Zugabe in dem in Schritt (J) definierten Bereich liegt;
(L) Heißhaltung der Zusammensetzung des Schrittes (K) bei der Temperatur des Schrittes (K) unter Rühren über einen Zeitraum von etwa 2 bis etwa 10 Minuten;
(M) Abkühlen auf eine Temperatur im Bereich von etwa 30°C bis etwa 50 °C;
(N) Zugabe von Starterkulturen zum Zwischenprodukt des Schrittes (K); und
(O-1) Abfüllung des im Schritt (N) erhaltenen Produktes; oder
(O-2) Zwischenlagerung in einem Tank unter sterilen Bedingungen des im Schritt (N) erhaltenen Produktes und nachfolgende Abfüllung.

Überraschenderweise wurde gefunden, dass nur mittels der erfindungsgemäßen Kombination oder Reihenfolge der Schritte (A) bis (O1) bzw. (O2) zusammen mit der Auswahl der spezifischen Inhaltsstoffe die Gewinnung eines Lebensmittelprodukts, insbesondere einer veganen Käsealternative, mit den gewünschten Eigenschaften gewährleistet wird. Verwendet man die Inhaltstoffe in einer anderen Reihenfolge oder hält man sich nicht an die Herstellungsbedingungen, wird das gewünschte Produkt nicht erhalten.

Bezüglich der verschiedenen Inhaltsstoffe, die in diesem Verfahren eingesetzt werden, gelten die vorhergehenden Ausführungen. Demzufolge gelten da beispielweise die vorhergehenden Definitionen, Mengenangaben und Gewichtsverhältnisse. In einer bevorzugten Ausführungsform weist das Wasser im Schritt (b) eine Temperatur ≥45 °C und < 60 °C auf, vorzugsweise eine Temperatur im Bereich von etwa 50 °C bis etwa 55 °C.

In einer weiteren bevorzugten Ausführungsform ist die Temperatur der Schritte (B) und (C) gleich.

In einer weiteren bevorzugten Ausführungsform ist die Temperatur der Schritte (B) und (D) gleich.

In einer besonderen bevorzugten Ausführungsform ist die Temperatur der Schritte (B), (C) und (D) gleich. Das hat sich als besonders vorteilhaft in Hinblick auf die Stabilität des Zwischenprodukts des Schrittes (d) erwiesen, da dadurch dieses Zwischenprodukts des Schrittes (D) eine homogene Mischung darstellt, und es zu keiner Phasentrennung kommt.

In einer bevorzugten Ausführungsform wird in dem Schritt (E) auf eine Temperatur ≥ 60 °C und ≤ 80 °C erhitzt, vorzugsweise auf eine Temperatur ≥ 60 °C und ≤ 70 °C, insbesondere bevorzugt auf eine Temperatur ≥ 60 °C und ≤ 65 °C.

In einer weiteren bevorzugten Ausführungsform ist die Temperatur der Schritte (E) und (f) gleich; das hat sich als besonders vorteilhaft in Hinblick auf die Stabilität des Zwischenprodukts des Schrittes (F) erwiesen, da dadurch dieses Zwischenprodukts des Schrittes (F) eine homogene Mischung darstellt, und es zu keiner Phasentrennung kommt, aber auch in Hinblick das Gefüge des Endproduktes.

In einer bevorzugten Ausführungsform wird in dem Schritt (G) auf eine Temperatur ≥ 70 °C und ≤ 80 °C erhitzt, vorzugsweise auf eine Temperatur von etwa 75°C. In einer weiteren bevorzugten Ausführungsform ist die Temperatur der Schritte (G) und (H) gleich.

In einer bevorzugten Ausführungsform erfolgt die Zugabe der nativen Stärke oder modifizierten Stärke, Kohlenhydrate und pflanzlichen Proteinen im Schritt (H) gleichzeitig.

Es konnte festgestellt werden, dass der zusätzliche Erhitzen-Schritt (Schritt (J) des Verfahrens) besonders vorteilhaft ist. Das hat sich auch als besonders vorteilhaft in Hinblick auf die Stabilität des Zwischenprodukts erwiesen, da dadurch dieses Zwischenprodukts eine homogene Mischung darstellt, und es zu keiner Phasentrennung kommt, aber auch in Hinblick das Gefüge des Endproduktes.

In einer bevorzugten Ausführungsform wird in dem Schritt (A) auf eine Temperatur ≥ 70 °C und ≤ 95 °C erhitzt, vorzugsweise auf eine Temperatur ≥ 80 °C und ≤ 90 °C, insbesondere bevorzugt auf eine Temperatur ≥ 83 °C und ≤ 87 °C. In einen besonderen Ausführungsform wird in dem Schritt (A) auf eine Temperatur von etwa 85 °C erhitzt.

In einer weiteren bevorzugten Ausführungsform ist die Temperatur der Schritte (A) und (K) gleich. Das hat sich auch als besonders vorteilhaft in Hinblick auf die Stabilität des Zwischenprodukts erwiesen, da dadurch dieses Zwischenprodukts eine homogene Mischung darstellt, und es zu keiner Phasentrennung kommt, aber auch in Hinblick das Gefüge des Endproduktes.

Ebenso ausschlaggebend für die gute Qualität des Endproduktes hat sich die Heißhaltung des Zwischenproduktes des Schrittes (K) bei einer bestimmten Temperatur und für einen bestimmten Zeitraum. Das hat sich auch als besonders vorteilhaft in Hinblick auf die Stabilität des Zwischenprodukts erwiesen, da dadurch dieses Zwischenprodukts eine homogene Mischung darstellt, und es zu keiner Phasentrennung kommt, aber auch in Hinblick das Gefüge des Endproduktes. In einer bevorzugten Ausführungsform erfolgt die Zugabe Aromen, Gewürze und/oder Farbstoffen im Schritt (K) gleichzeitig.

In einer bevorzugten Ausführungsform erfolgt die Heißhaltung des Schrittes (L) über einen Zeitraum von etwa 3 bis etwa 8 Minuten, insbesondere bevorzugt über einen Zeitraum von etwa 4 bis etwa 5 Minuten. Im Sinne der vorliegenden Erfindung bedeutet Heißhaltung, dass die Temperatur im Schritt (L) die gleiche ist wie im Schritt (K).

Anschließend erfolgt eine Abkühlung auf eine Temperatur im Bereich von etwa 30°C bis etwa 50 °C (Schritt (M) des erfindungsgemäßen Verfahrens). Ziel dieses Schrittes ist das Zwischenprodukt auf die richtige Temperatur zu bringen, damit die nachfolgende Fermentierung optimal erfolgen kann.

In einer bevorzugten Ausführungsform wird in dem Schritt (M) auf eine Temperatur von etwa 35 °C bis etwa 45 °C abgekühlt, insbesondere bevorzugt auf eine Temperatur von etwa 40 °C.

In einer bevorzugten Ausführungsform erfolgt die Zugabe von Starterkulturen bei einer Temperatur von etwa 40 °C.

Anschließend kann das Produkt direkt abgefüllt werden, so dass die Fermentation und die Reifung in der Verpackung erfolgt (Schritt (O1) des erfindungsgemäßen Verfahrens), oder das Produkt wird in einem dafür geeigneten Tank unter sterilen Bedingungen zwischengelagert, und nach Fermentation in der Verpackung abgefüllt wird, wo die Reifung erfolgt. Es konnte festgestellt werden, dass die Leistung beim Rühren in den verschiedenen Schritten des erfindungsgemäßen Verfahrens insbesondere in Hinblick auf die Konsistenz und das Gefüge des Endproduktes von großer Bedeutung ist.

In einer bevorzugten Ausführungsform liegt die Drehzahl beim Rühren in den Schritten (B) bis (K) im Bereich von etwa 1600 bis etwa 2000 U/min, vorzugsweise von etwa 1700 bis etwa 1900 U/ min, und insbesondere 1800 U/ min.

In einer weiteren bevorzugten Ausführungsform liegt die Drehzahl beim Rühren im Schritt (L) im Bereich von etwa 1000 bis etwa 1500 U/ min, vorzugsweise von etwa 1200 bis etwa 1400 U/ min, und insbesondere 13000 U/ min.

In einer weiteren bevorzugten Ausführungsform umfasst das erfindungsgemäße Verfahren einen zusätzlichen Schritt, in dem das hergestellte vegane Lebensmittelprodukt gerieben wird.

### GEWERBLICHE ANWENDBARKEIT

Ein weiterer Gegenstand der vorliegenden Erfindung ist ein Lebensmittelprodukt; insbesondere eine veganen Käsealternative, wie vorstehend erläutert erhältlich oder erhalten durch das Verfahren ebenfalls wie vorstehend erläutert.

Ein weiterer Gegenstand der vorliegenden Erfindung ist ein Nahrungsmittelprodukt zum Heißverzehr umfassend ein Lebensmittelprodukt, insbesondere eine veganen Käsealternative, wie vorstehend definiert oder erhältlich durch das vorstehend beschriebenesVerfahren. In einer bevorzugten Ausführungsform ist das Nahrungsmittelprodukt ausgewählt aus der Gruppe bestehend aus Pizza, Pasta, Lasagne, Croque Monsieur, Käseburger, Gratin, Fondue, Hot Dog, Waffel, Sandwich, Wrap, gebackener Käse, Tortilla Chip oder Käsesauce.

### BEISPIELE

### Beispiel 1

Ein beispielhaftes veganes Lebensmittelprodukt (vegane Käsealternative) gemäß der vorliegenden Erfindung wurde hergestellt, umfassend die Bestandteile gemäß **Tabelle** 1:

**Tabelle 1**

| Produktzusammensetzung | |
|---|---|
| **Zutat** | **Menge (Gew.-%)** |
| (Koch-)Salz | 1,5 |
| Carrageen | 0,5 |
| Fettkomponente (Kokosfett: Sheabutter; 70:30) | 10 |
| Rapsölbasierten Oleogel (strukturbildende Komponente: Ethylcellulose) | 25 |
| Native Stärke | 25 |
| Dextrose | 0,5% |
| Lupinenprotein (unfermentiert) | 3 |
| Aromen, Gewürze und Farbstoffe | 0,5 |
| Wasser | Zu 100 Gew.-% |

Das Produkt wurde nach dem Verfahren gemäß der vorliegenden Erfindung hergestellt. Die entsprechenden Prozessparameter werden in der **Tabelle 2** zusammengefasst:

**Tabelle 2**

| Prozessparameter | |
|---|---|
| **Verfahrensschritte** | **Bedingungen** |
| A | 50-55 °C, 1800 U/min |
| B | 50-55 °C, 1800 U/min |
| C | 50-55 °C, 1800 U/min |
| D | 60-65 °C, 1800 U/min |
| E | 60-65 °C, 1800 U/min |
| F | 75 °C, 1800 U/min |
| G | 75 °C, 1800 U/min |
| H | 85 °C, 1800 U/min |
| J | 85 °C, 1800 U/min |
| K | 85 °C, 1300 U/min, 4-5 min |
| L | 40 °C, 1300 U/min |

Das Produkt wurde abgefüllt und abgekühlt. Das erhaltene Produkt (= **P1**) wies eine käseähnliche Konsistenz auf.

### Vergleichsbeispiel V1

Ein beispielhaftes veganes Lebensmittelprodukt (vegane Käsealternative) wurde hergestellt, umfassend:

**Tabelle 3**

| Produktzusammensetzung | |
|---|---|
| **Zutat** | **Menge (Gew.-%)** |
| (Koch-)Salz | 1,5 |
| Carrageen | 0,5 |
| Fettkomponente (Kokosfett: Sheabutter = 70:30) | 24 |
| Stärke | 25 |
| Dextrose | 0,5% |
| Lupinenprotein (nicht fermentiert) | 3 |
| Aromen, Gewürze und Farbstoffe | 0,5 |
| Wasser | Zu 100 Gew.-% |

In diesem Fall wurde das Produkt wie folgt hergestellt: In einem ersten Schritt wurden Wasser, Proteine, Fettkomponenten, die Stärke in einen geeigneten Behälter (bspw. Rührer mit Erhitzungsfunktion) gegeben. Die Zutaten wurden 1 min verrührt und anschließend auf 95 °C erhitzt, was etwa 10 min dauerte. Der Erhitzungsschritt wurde bei etwa 2.000 - 9.000 U/min durchgeführt. Nach Erreichen einer Temperatur von 95 °C wurden Carrageen, (Koch-)Salz, Kohlenhydrate und die Aromen, Gewürze und Farbstoffe dazugegeben. Die gesamte Masse wurde dann für 2 min unter starkem Rühren (8.000-12.000 U/min) homogenisiert. Nach dem Homogenisieren wurde die Masse in geeignete Portionen abgefüllt und abgekühlt. Das erhaltene Produkt (= V1) wies eine käseähnliche Konsistenz auf.

### Vergleichsbeispiel V2

Ein beispielhaftes veganes Lebensmittelprodukt (vegane Käsealternative) wurde hergestellt, umfassend die Bestandteile nach Tabelle 4:

**Tabelle 4**

| Produktzusammensetzung | |
|---|---|
| **Zutat** | **Menge (Gew.-%)** |
| (Koch-)Salz | 1,5 |
| Carrageen | 0,5 |
| Fettkomponente (Kokosfett : Sheabutter = 70:30) | 24 |
| Modifizierte Stärke | 25 |
| Dextrose | 0,5% |
| Lupinenprotein (nicht fermentiert) | 3 |
| Aromen, Gewürze und Farbstoffe | 0,5 |
| Wasser | Zu 100 Gew.-% |

Das Produkt wurde nach dem Verfahren gemäß der vorliegenden Erfindung hergestellt. Die entsprechenden Prozessparameter werden in der **Tabelle 5** zusammengefasst:

**Tabelle 5**

| Prozessparameter | |
|---|---|
| **Schritte des Verfahrens** | **Bedingungen** |
| A | 50-55 °C, 1800 U/min |
| B | 50-55 °C, 1800 U/min |
| C | 50-55 °C, 1800 U/min |
| D | 60-65 °C, 1800 U/min |
| E | 60-65 °C, 1800 U/min |
| F | 75 °C, 1800 U/min |
| G | 75 °C, 1800 U/min |
| H | 85 °C, 1800 U/min |
| J | 85 °C, 1800 U/min |
| (K | 95 °C, 1800 U/min, 12 min |
| L | 40 °C, 1300 U/min |

Das Produkt wurde abgefüllt und abgekühlt. Das durch das Verfahren erhaltene Produkt (= V2) wies eine käseähnliche Konsistenz auf.

### Beispiel 2

### Evaluierung von P1, V1 und V2

Nach Lagerung wurden P1, V1 und V2 von einem Panel bestehend aus fünf erfahrenen und geschulten Testern in Hinblick auf die optischen (Bräunung), geschmacklichen Eigenschaften, Konsistenz und Überbackeigenschaften (nach Anwendung der Produkte in Herstellung einer Pizza Margherita). Die Ergebnisse sind in der **Tabelle 6** zusammengefasst.

**Tabelle 6**

| Produktbewertung | | | | |
|---|---|---|---|---|
| **Beispiele** | **Geschmack** | **Konsistenz** | **Bräunung** | **Überbackeigenschaften** |
| P1 | 1 | 1 | x | 1 |
| V1 | 2 | 2 | x | 2 |
| V2 | 3 | 2 | √ | 3 |

### Bewertungsskala:

| | |
|---|---|
| Geschmack | 1 bis 5, wobei 1 die maximale Bewertung bedeutet |
| Konsistent | 1 bis 5, wobei 1 die maximale Bewertung bedeutet |
| Bräunung | x= nicht festzustellen; √ = vorhanden |
| Überbackeigenschaften | 1 bis 5, wobei 1 die maximale Bewertung bedeutet |

Die experimentellen Daten zeigen, dass P1 (erfindungsgemäße Rezeptur und erfindungsgemäßes Verfahren) verbesserte Ergebnisse hinsichtlich Optik, Geschmack, Konsistenz und Überbackeigenschaften zeigt.

## Patentansprüche

1. Lebensmittelprodukt enthaltend ein Oleogel, wobei die kontinuierliche Phase des Oleogels ein Pflanzenöl ist.

2. Lebensmittelprodukt nach Anspruch 1, wobei das Lebensmittelprodukt ein veganes Produkt darstellt.

3. Lebensmittelprodukt nach Anspruch 2, wobei das Lebensmittelprodukt eine vegane Käsealternative oder eine vegane Margarine darstellt.

4. Lebensmittelprodukt nach einem der vorhergehenden Ansprüche, wobei das Produkt eine strukturbildende Komponente enthält, die ausgewählt ist aus der Gruppe bestehend aus Polysacchariden, Monoglyceriden und hydrophoben Proteinen.

5. Lebensmittelprodukt nach einem der vorhergehenden Ansprüche, wobei der Gehalt an Pflanzenöl des Oleogels im Bereich von etwa 70 bis etwa 95 Gew.-% liegt.

6. Lebensmittelprodukt nach einem der vorhergehenden Ansprüche, wobei der Gehalt an Pflanzenöl im Bereich von etwa 5 bis etwa 40 Gew.-% liegt.

7. Lebensmittelprodukt nach Anspruch 6, wobei der Gehalt an Pflanzenöl im Bereich von etwa 15 bis etwa 35 Gew.-% liegt.

8. Lebensmittelprodukt nach einem der vorhergehenden Ansprüche, wobei das Oleogel ferner einen Emulgator umfasst.

9. Lebensmittelprodukt nach Anspruch 8, wobei der Emulgator ausgewählt aus der Gruppe bestehend aus Polyoxyethylensorbitanmonooleat (Tween 80), Polyoxyethylensorbitanmonostearat (Tween 60), Sorbitanmonooleat (SMO oder Span 80), Sorbitanmonostearat (SMS oder Span 60), Glycerinmonooleat (GMO), Glycerinmonostearat (GMS), Glycerinmonopalmitat (GMP), Polyglycerylester von Laurinsäure - Polyglycerylpolylaurat (PGPL), Polyglycerylester von Stearinsäure - Polyglyerylpolystearat (PGPS), Polyglycerylester von Ölsäure (PGPO) - Polyglycerylpolyoleat (PGPO) und Polyglycerylester von Ricinolsäure (PGPR) ist.

10. Lebensmittelprodukt nach Anspruch 9, wobei der Emulgator ausgewählt aus der Gruppe bestehend aus SMS, GMS, SMO, GMO und PGPL ist.

11. Lebensmittelprodukt nach Anspruch 10, wobei der Emulgator SMO oder GMO ist.

12. Lebensmittelprodukt nach mindestens einem der Ansprüche 8 bis 11, wobei die strukturbildende Komponente des Oleogels und der Emulgator im Gewichtsverhältnis 10:1 bis 1:1 vorliegen.

13. Lebensmittelprodukt nach einem der vorhergehenden Ansprüche enthaltend oder bestehend aus:
(a) etwa 0 bis etwa 20 Gew.-% einer pflanzlich-basierten Fettkomponente;
(b) etwa 5 bis etwa 60 Gew.-% des rapsölbasierten Oleogels,
(c) etwa 15 bis etwa 35 Gew.-% native Stärke oder modifizierte Stärke;
(d) etwa 0,5 bis etwa 3 Gew.-% (Koch-)Salz;
(e) etwa 0,1 bis etwa 2 Gew.-% Gelierungsmittel;
(f) etwa 0,1 bis etwa 2 Gew.-% Kohlenhydrate;
(g) etwa 0,1 bis etwa 6 Gew.-% pflanzliche Proteine;
(h) etwa 0,1 bis etwa 1,5 Gew.-% Aromen, Gewürze und/oder Farbstoffe;
(j) 0 bis etwa 5 Gew.-% weitere Nahrungsmittelbestandteile,
mit der Maßgabe, dass sich alle Mengenangaben mit Wasser zu 100 Gew.-% ergänzen.

14. Verfahren zur Herstellung des Lebensmittelprodukts nach einem der vorhergehenden Ansprüche umfassend oder bestehend aus den folgenden Schritten:
(A) Bereitstellen eines pflanzenölbasierten Oleogels;
(B) Bereitstellen von erwärmtem Wasser, wobei das Wasser eine Temperatur ≥30 °C und < 60 °C aufweist;
(C) Zugabe von Salz zum Wasser aus Schritt (B) unter Rühren, wobei die Temperatur während und am Ende der Zugabe in dem in Schritt (B) definierten Bereich liegt;
(D) Zugabe eines Gelierungsmittels zum Zwischenprodukt des Schrittes (C) unter Rühren, wobei die Temperatur während und am Ende der Zugabe in dem Schritt (b) definierten Bereich liegt;
(E) Erhitzen des Zwischenprodukts des Schritts (D) unter Rühren auf eine Temperatur ≥ 60 °C b ≤ 90 °C;
(F) Zugabe des Oleogels des Schritts (A) und optional einer pflanzlich-basierten Fettkomponente zum Zwischenprodukt des Schrittes (E) unter Rühren, wobei die Temperatur während und am Ende der Zugabe in dem in Schritt (E) definierten Bereich liegt;
(G) Erhitzen des Zwischenprodukts des Schritts (F) auf eine Temperatur ≥ 60 °C und ≤ 90 °C unter Rühren, mit der Maßgabe, dass die Temperatur höher als die Temperatur in den Schritten (E) bis (F) ist;
(H) Zugabe von:
- mindestens einer nativen Stärke oder mindestens einer modifizierten Stärke,
- Kohlenhydrate, die verschieden von Stärke sind, und
- pflanzlichen Proteinen;
zum Zwischenprodukt des Schrittes (F) unter Rühren, wobei die Temperatur während und am Ende der Zugabe in dem in Schritt (F) definierten Bereich liegt;
(J) Erhitzen des Zwischenprodukts des Schritts (H) auf eine Temperatur ≥ 60 °C und ≤ 100 °C unter Rühren, mit der Maßgabe, dass die Temperatur höher als die Temperatur der Schritte (E) bis (H) liegt;
(K) Zugabe von Aromen, Gewürze und/oder Farbstoffe und optional von weiteren Nahrungsmittelbestandteilen zum Zwischenprodukt des Schrittes (J) unter Rühren, wobei die Temperatur während und am Ende der Zugabe in dem in Schritt (J) definierten Bereich liegt;
(L) Heißhaltung der Zusammensetzung des Schrittes (K) bei der Temperatur des Schrittes (K) unter Rühren über einen Zeitraum von etwa 2 bis etwa 10 Minuten;
(M) Abkühlen auf eine Temperatur im Bereich von etwa 30°C bis etwa 50 °C;
(N) Zugabe von Starterkulturen zum Zwischenprodukt des Schrittes (K); und
(O-1) Abfüllung des im Schritt (N) erhaltenen Produktes; oder
(O-2) Zwischenlagerung in einem Tank unter sterilen Bedingungen des im Schritt (N) erhaltenen Produktes und nachfolgende Abfüllung.

15. Nahrungsmittel zum Heißverzehr umfassend ein Lebensmittelprodukt nach mindestens einem der Ansprüche 1 bis 13 oder erhältlich durch das Verfahren des Anspruchs 14.
